# EUROPEAN PATENT SPECIFICATION

(11) **EP 3 028 092 B1**
(45) Date of publication and mention of the grant of the patent: **14.09.2022**
(21) Application number: 14750706.5
(22) Date of filing: 25.07.2014
(51) Int. Cl.: G02C 5/04

(54) **FRAME FOR CORRECTIVE EYEGLASSES AND SUNGLASSES**
RAHMEN FÜR BRILLEN UND SONNENBRILLEN ZUR SICHTKORREKTUR
MONTURE POUR DES VERRES CORRECTEURS ET DES LUNETTES DE SOLEIL

(30) Priority: 01.08.2013 IT TV20130123
(43) Date of publication of application: 08.06.2016
(73) Proprietor: Occhiali 2.0 S.r.l., 98051 Barcellona Pozzo di Gotto (ME) (IT)
(72) Inventor: PERDICHIZZI, Francesco, 98051 Barcellona Pozzo di Gotto (IT)
(74) Representative: Modiano, Micaela Nadia
(86) International application number: PCT/EP2014/066037
(87) International publication number: WO 2015/014746

(56) References cited:
- DE-A1- 10 146 918
- GB-A- 303 730
- US-A- 4 153 348
- US-A- 4 820 035
- US-A- 5 796 461
- US-B1- 6 698 882

## Description

The present invention relates to a frame for corrective eyeglasses and sunglasses.

Eyeglasses are usually constituted by a frame, often made of plastics or metal, which is mainly constituted by two eyepieces or lens mounts, two arms, and a bridge and/or a nosepiece.

The bridge is the connection between the eyepieces or lens mounts, and is arranged at the upper part of the eyepieces in line with the eyebrows.

The nosepiece is the connection of the eyepieces or lens mounts in an intermediate position, in contact with the nose.

The eyepieces accommodate previously-produced lenses that have been cut to size on the basis of the geometry of the eyepiece or lens mount proper.

Very often, eyeglasses are not positioned correctly on the face of the user because the size of the nosepiece of the eyeglasses is not adapted to the size of the nose of the user.

The part of the face that most influences the fit of an eyeglass frame, except for rare cases, is the nasal bridge which is different in shape and size for each individual.

Even the more or less trapezoidal shape of the cross-section of the nasal bridge determines the fit of the eyeglass frame.

The variability of sizes and shapes of nasal bridges creates difficulties for makers, who for each model of eyeglasses have to make as many frames (with different nosepiece measurements) as there are possible measurements of customers nasal bridges.

Currently for each model of eyeglasses, frames are made with two or three different sizes of bridges or nosepieces, so as to obtain some correspondence with the different sizes of nasal bridges.

In this way a segment of sizes of nasal bridges has been covered, but it is still a long way off from the ideal situation of adapting the eyeglass frame to the faces of all possible users, since all intermediate positions between one size of the nosepiece and the next are not covered.

From the industrial point of view, making, as currently happens for the known art, the same model of eyeglasses with several sizes of nosepiece entails a sharp increase in costs for producing the items and for managing production.

To meet customers needs quickly requires the production of stocks of all sizes of nosepiece with a major financial commitment and, sometimes, also resulting in a lot of unsold stock.

GB 303 730 A discloses a spectacle frame in which the two carriers for the lenses are interconnected by an adjustable bridge which permits adjustment of the distance between the lenses. The lens frames have notched bars fixed thereto respectively, which are slidable within a sheath with a metal lining having teeth indentations which snap into the notches in the bars which are fixed in selected positions according to the length of the bridge required.

The aim of the present application is therefore to resolve the above mentioned technical problems, by eliminating the drawbacks in the cited known art and hence providing an invention that makes it possible to adapt the eyeglass frame to the size of the nasal bridge of every user.

Within the above aim, an object of the invention is to provide an invention that makes such adaptation possible rapidly and simply as a function of the specific morphological shape structures of the user.

Another object is to provide an invention that enables an optician to improve the service to his/her customers by offering them an eyeglass frame that is structured as a function of the specific facial characteristics of the customer, thus giving the perception that the eyeglass frame has been especially made for his/her face by taking account of the shape structure of his/her nasal septum.

Another object is to provide an invention that is structurally simple and low cost and can be made with the usual conventional plants.

In accordance with the invention, there is provided a frame for corrective eyeglasses and sunglasses as defined in the appended claims.

Further characteristics and advantages of the invention will become better apparent from the detailed description of a particular, but not exclusive, embodiment, illustrated by way of non-limiting example in the accompanying drawings wherein:

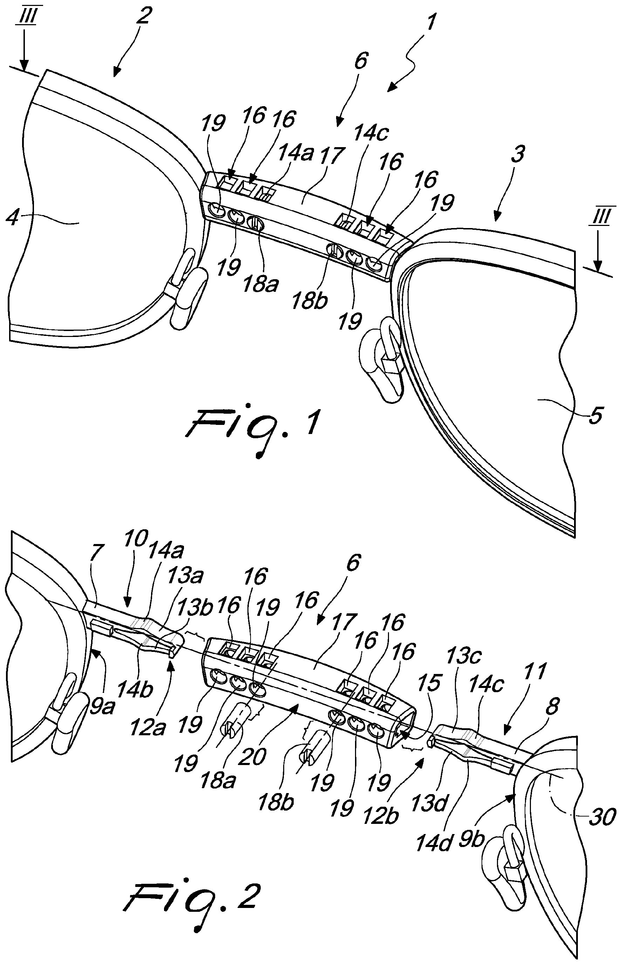

Figure 1 is a three-quarters side view of the frame;
Figure 2 is an exploded view of the frame in the previous figure;

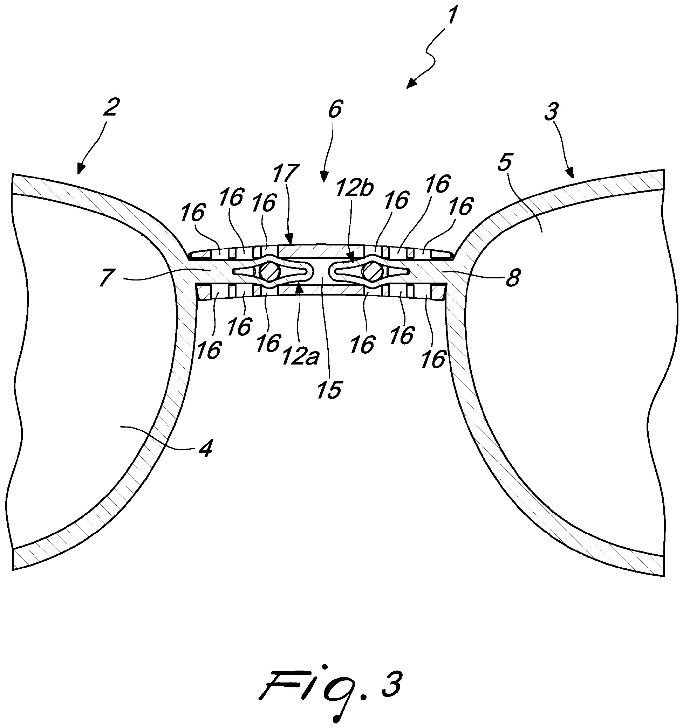

Figure 3 is a sectional view of the frame taken along the line III-III in Figure 1;
Figure 4 is a three-quarters side view of a variation of the frame;
Figure 5 is an exploded view of the frame in the previous figure;
Figure 6 is a sectional view of the frame taken along the line VI-VI in Figure 4;
Figure 7 is a three-quarters side view of a variation of the frame;
Figure 8 is an exploded view of the frame in the previous figure;
Figure 9 is a sectional view of the frame taken along the line IX-IX in Figure 7;

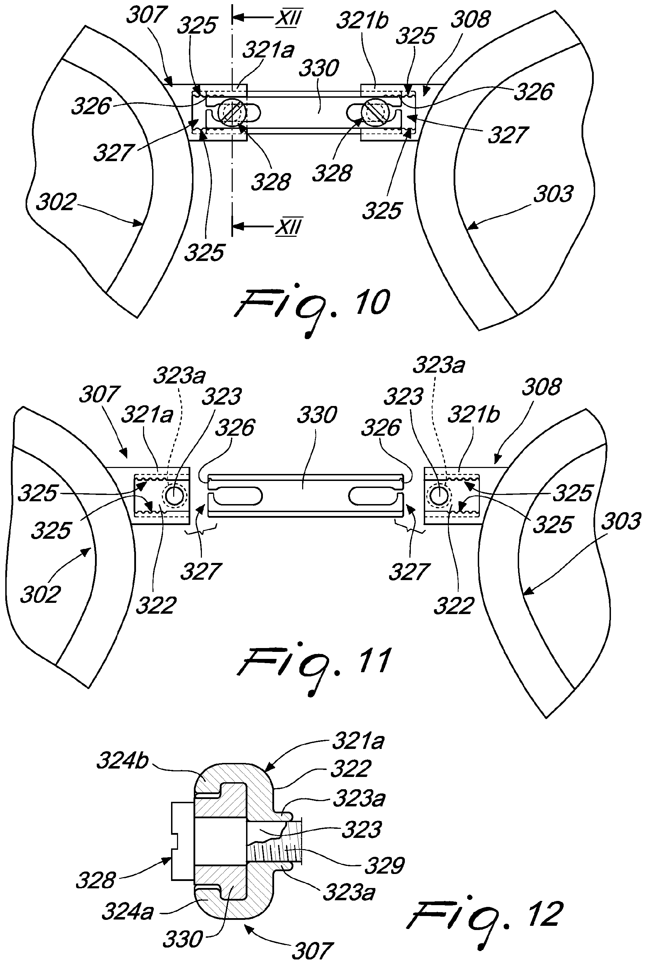

Figure 10 is a front elevation view of a different embodiment;
Figure 11 shows a detail of the previous figure;
Figure 12 is a cross-sectional view along the line XII-XII in Figure 10.

With reference to the figures, the reference numeral 1 generally designates a frame for corrective eyeglasses and sunglasses which is constituted by a first and a second support or eyepiece or lens mount 2, 3 for a lens 4, 5; the first and second supports 2, 3 are interposed and interact selectively with a nosepiece 6 which is the connection of the eyepieces or lens mounts in an intermediate position in contact with the nose.

The nosepiece 6, which has a substantially parallelepipedal and axially hollow shape, is constituted by a first arm 7 and by a second arm 8 which protrude, in mutually opposite directions, from the mutually facing outer lateral surfaces 9a, 9b of the first and second supports 2, 3.

Associated with the end of the first arm 7 and of the second arm 8 means are provided for axial adjustment of the optical axes, such means being constituted by a first slider 10 and by a second slider 11 which protrude radially from the ends, arranging themselves, or not, along the same axis 30 that is substantially parallel to the plane of arrangement of the first and second supports 2, 3.

The axis 30 in addition to being a single straight axis can also be, as an alternative, a discontinuous axis according to the shape structure of the nosepiece 6.

Alternatively the first and second sliders 10, 11 can lie on planes that are mutually staggered both on a horizontal plane and on a vertical plane.

Each one of the first and second sliders 10, 11 has at one end an elastic fork 12a, 12b that is composed of a first tab and a second tab 13a, 13b, 13c, 13d, substantially shaped like an inverted V and arranged one above the other; at the vertex of each one of the first and second tabs 13a, 13b, 13c, 13d grip means are provided for engagement means present in the nosepiece 6.

The grip means are constituted by a tooth 14a, 14b, 14c, 14d that is arranged at the vertex of each one of the first and second tabs 13a, 13b, 13c, 13d, each one of the teeth being directed toward the outside of the first and second tabs 13a, 13b, 13c, 13d.

The size and shape of the first and second tabs 13a, 13b, 13c, 13d, together with their deformability, are such as to allow their insertion/extraction within the cavity 15 that is provided axially with respect to the nosepiece 6.

The cavity 15 can rest on a same axis or on axes that are distinct.

The engagement means are constituted by a plurality of first seats 16 that pass through the entire thickness of the nosepiece 6 along an axis that is perpendicular to the upper lateral surface 17 of the nosepiece 6.

The shape of the first seats 16 is such as to allow the selective positioning of the teeth 14a, 14b, 14c, 14d which are forced into the first seats by the elastic deformability of the first and second tabs 13a, 13b, 13c, 13d.

Means are furthermore present for locking the teeth 14a, 14b, 14c, 14d within the selected seats among the first seats 16, such means being constituted by a pair of screws or cylinders 18a, 18b, which are threaded externally and are associated within one of adapted and complementarily threaded second seats 19 that are provided at right angles to the lateral surface 20 of the nosepiece 6.

In this particular embodiment, six first seats 16 and six second seats 19 are shown, but their number can vary as a function of specific requirements.

The size of the second seats 19 and of the cylinders 18a, 18b are such that the insertion of the cylinders 18a, 18b entails their positioning in a pair between the first and second tabs 13a, 13b, 13c, 13d at the teeth 14a, 14b, 14c, 14d; in this condition the mutual positioning of the first and second sliders 10, 11 and the nosepiece 6 is fixed.

The user can thus initially, once the cylinders 18a, 18b are loosened so as to render the cavity 15 free, act on one and/or the other of the first and second sliders 10, 11, positioning them more or less inside the nosepiece 6; once the desired position is found and thus the teeth 14a, 14b, 14c, 14d are positioned in the desired seats among the first seats 16, such position can be fixed by tightening the cylinders 18a, 18b.

Thus it has been found that the invention fully achieves the intended aim and objects, a frame having been obtained that makes it possible to be adapted to the actual size of the nasal bridge of every user, such adjustment being capable of being carried out rapidly and simply as a function of the specific morphological shape structures of the user.

The optician can thus improve the service to his/her customers by offering them an eyeglass frame that is structured as a function of the specific facial characteristics of the customer, thus giving the perception that the eyeglass frame has been especially made for his/her face by taking account of the shape structure of his/her nasal septum.

Furthermore the invention, by acting on the size of the nosepiece, determines the distance of the optical centers of the frame and therefore, in prescription eyeglasses, is capable of making it coincide with the interpupillary axe, which differs from individual to individual; the latter function is very important because it eliminates the problems that can be correlated to such aberration (non-coincidence of the optical axes with the pupillary axes).

The illustrated solution can also be useful in the event that, in an eyeglasses frame that is already fitted with lenses, an error is found in the distance of the optical centers in the prescription lenses owing to an error in cutting the lenses or of mounting them in the frame.

Obviously the invention can be implemented both in plastics eyeglasses and in metal eyeglasses.

For plastics eyeglasses, by way of example, the nosepiece 6 can be overmolded, taking care to protect the cavity 15 and the first and second seats 16, 19.

The present invention thanks to the solution adopted in order to obtain the axial adjustment of the lens mounts makes it possible to limit production of a same model to just one frame, with considerable reduction of industrial costs and easier management of production, in that fewer codes need to be managed.

Opticians, too, will appreciate a great commercial benefit because they will no longer have to maintain stocks for each nosepiece.

The perfect adaptation to the face is obtained thanks also to the double adjustment that can be achieved by carrying out two distinct adjustments, which can be performed on the right and/or left sides of the axis of the eyeglass frame; discrete and non-arbitrary positions of the teeth 14a, 14b, 14c, 14d can be obtained on the first seats 16, thus correctly setting the length of the nosepiece of the eyeglasses at an optimal position.

It follows from this that the adjustment can occur separately by acting both on the first slider 10 on the left and on the second slider 11 on the right and therefore an asymmetric adjustment can also be carried out, should it be necessary.

Once the optimal configuration of the frame to the face of the user has been found it is possible to maintain it by acting on the cylinders 18a, 18b.

Obviously the materials used as well as the dimensions of the individual components of the invention may be more relevant according to specific requirements.

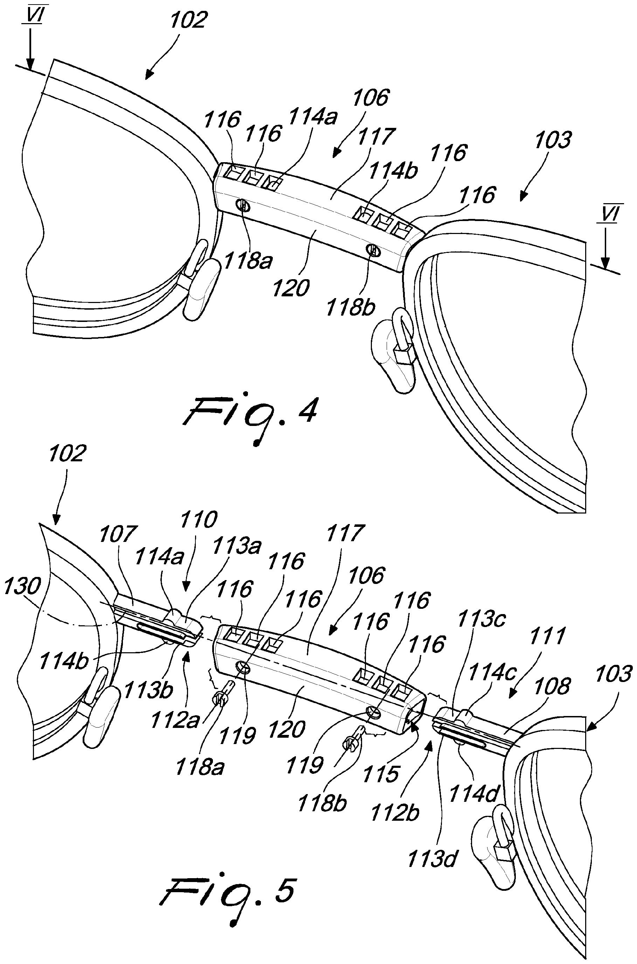

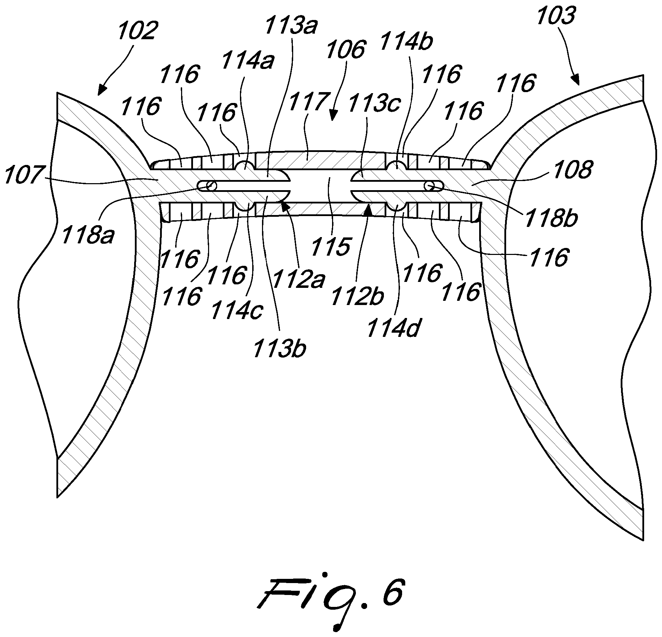

Thus, for example, Figures 4 to 6 show a further embodiment in which, associated with the end of the first arm 107 and of the second arm 108 means are provided for axial adjustment of the optical axes, such means being constituted by a first slider 110 and by a second slider 111 which protrude radially from the ends, arranging themselves along a different or same axis 130 that is substantially parallel to the plane of arrangement of the first and second supports 102, 103.

The axis 130 in addition to being a single straight axis can also be, as an alternative, a discontinuous axis according to the shape structure of the nosepiece 106.

Each one of the first and second sliders 110, 111 has, at one end, an elastic fork 112a, 112b that is composed of a first tab and a second tab 113a, 113b, 113c, 113d, which have a substantially linear shape and are arranged one above the other; at each one of the first and second tabs 113a, 113b, 113c, 113d there are grip means for engagement means provided in the nosepiece 106, the grip means being constituted by a tooth 114a, 114b, 114c, 114d that protrudes from each one of the first and second tabs 113a, 113b, 113c, 113d and is directed toward the outside of the first and second tabs 113a, 113b, 113c, 113d.

The size and shape of the first and second tabs 113a, 113b, 113c, 113d, together with their deformability, are such as to allow their insertion/extraction within the cavity 115 that is provided axially with respect to the nosepiece 106.

The cavity 115 can rest on a same axis or on axes that are distinct.

The engagement means are constituted by a plurality of first seats 116 that pass through the entire thickness of the nosepiece 106 along an axis that is perpendicular to the upper lateral surface 117 of the nosepiece 106.

The shape of the first seats 116 is such as to allow the selective positioning of the teeth 114a, 114b, 114c, 114d which are forced into the first seats by the elastic deformability of the first and second tabs 113a, 113b, 113c, 113d.

Means are furthermore present for locking the teeth 114a, 114b, 114c, 114d within the selected seats among the first seats 116, such means being constituted by a pair of screws or cylinders 118a, 118b, which are threaded externally and are associated within one of two or more adapted and complementarily threaded second seats 119 that are provided at right angles to the lateral surface 120 of the nosepiece 6.

The dimensions of the second seats 119 and of the cylinders 118a, 118b are such that the insertion of the cylinders 118a, 118b entails the locking of the teeth 114a, 114b, 114c, 114d within the selected seats among the first seats 116.

Such solution also achieves the set aim and objects.

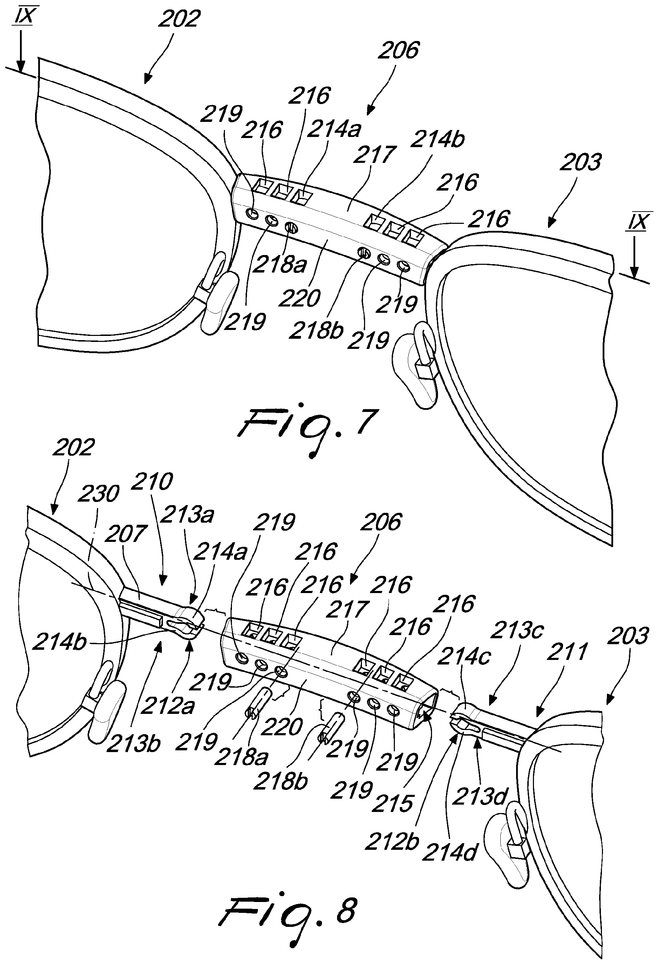

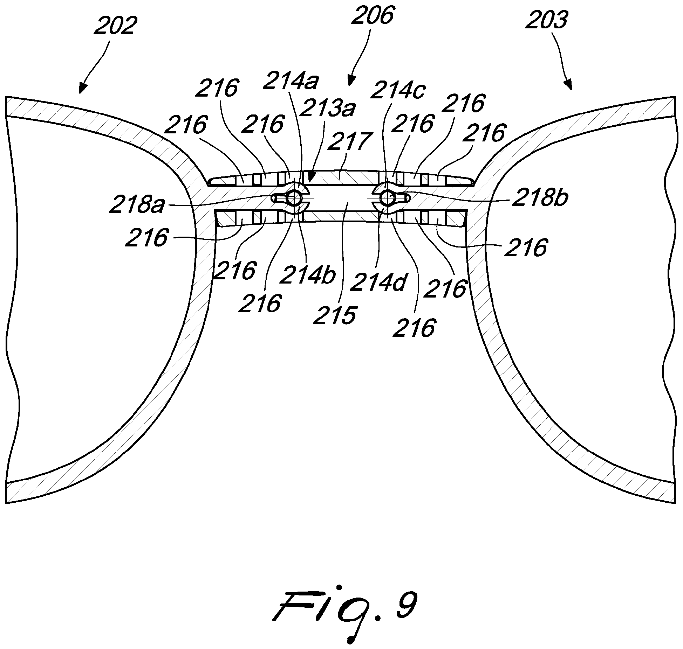

Thus, for example, Figures 7 to 9 show a further embodiment in which, associated with the end of the first arm 207 and second arm 208 means are provided for axial adjustment of the optical axes, such means being constituted by a first slider 210 and by a second slider 211 which protrude radially from the ends, arranging themselves along a different or same axis or a discontinuous axis 230 that is substantially parallel to the plane of arrangement of the first and second supports 202, 203.

Each one of the first and second sliders 210, 211 has, at one end, an elastic fork 212a, 212b that is composed of a first tab and a second tab 213a, 213b, 213c, 213d, which have a substantially linear shape and are arranged one above the other, in the first and second tabs 213a, 213b, 213c, 213d there being grip means for engagement means provided in the nosepiece 206, the grip means being constituted by arc-like tabs 214a, 214b, 214c, 214d, which are present at the ends of the first and second tabs 213a, 213b, 213c, 213d, which are directed along the same axis of the cavity 215.

The size and shape of the first and second tabs 213a, 213b, 213c, 213d, together with their deformability, are such as to allow their insertion/extraction within the cavity 215 that is provided axially with respect to the nosepiece 206.

The cavity 215 can rest on a same axis or on axes that are distinct.

The engagement means are constituted by a plurality of first seats 216 that pass through the entire thickness of the nosepiece 206 along an axis that is perpendicular to the upper lateral surface 217 of the nosepiece 206.

The shape of the first seats 216 is such as to allow the selective positioning, at one of them, of arc-like tabs 214a, 214b, 214c, 214d which are forced into the cavity 215 by the elastic deformability of the first and second tabs 213a, 213b, 213c, 213d.

Means are furthermore present for locking the arc-like tabs 214a, 214b, 214c, 214d within the selected seats among the first seats 216, such means being constituted by a pair of screws or cylinders 218a, 218b, which are threaded externally and are associated within one of two or more adapted and complementarily threaded second seats 219 that are provided at right angles to the lateral surface 220 of the nosepiece 206.

The dimensions of the second seats 219 and of the cylinders 218a, 218b are such that the insertion of the cylinders 218a, 218b entails the locking of the teeth 214a, 214b, 214c, 214d within the selected seats among the first seats 216.

Such solution also achieves the set aim and objects.

In a different embodiment, the first and second arms 307, 308 are each constituted by a hollow body 321a, 321b that is integral with and protrudes at the first and second supports or eyepieces or lens mounts 302, 303 and by a substantially T-shaped slider 330 that is slideably associable, adjustably, between the hollow bodies 321a, 321b.

Each hollow body 321a, 321b is substantially C-shaped in transverse cross-section, being provided at the base 322 with a hole 323 that is threaded internally and connected to a circular lip 323a that is likewise holed and threaded.

At the mutually facing ends of the wings 324a, 324b of each one of the hollow bodies 321a, 321b, hollow regions 325 are defined that are adapted to constitute a temporary engagement seat for complementarily shaped grip means that are constituted by a tooth 326 that is associated with and protrudes at the slider 330.

Slideably associated within each each hollow body 321a, 321b are the free ends of the slider 330, the latter having, proximate to the ends, axial cutouts or seats 327, slot-shaped, which are open outwardly so as to define an elastically deformable fork structure.

Each tooth 326 protrudes toward one of the hollow regions 325 and, thanks to the deformability of the fork, allows the insertion of the slider 330 to the desired extent, presettable, within each hollow body 321a, 321b.

The temporary locking, to be used as a solid and permanent fixing, of the slider 330 at a desired point of each one of the hollow bodies 321a, 321b is made possible by way of a locking screw 328 whose threaded shank 329 interacts with the complementarily threaded hole 323 that is defined on the base 322 of each hollow body 321a, 321b, the threading continuing so as to affect all of the lip 323a.

## Claims

1. A frame for corrective eyeglasses and sunglasses, comprising a first support and a second support (2, 102, 3, 103) for a lens (4, 5), which are interposed and interact selectively with a nosepiece (6, 106; 206) provided with means for axial adjustment of the distance of the optical centers, said axial adjustment means comprising, arranged between said supports and said nosepiece, elastically deformable grip means that selectively engage engagement means, and locking means, separate from said grip means, for locking said grip means with said engagement means, said elastically deformable grip means comprising an elastic fork (12a, 12b; 112a, 112b; 212a, 212b; 327, 330) provided with a tooth (14a, 14b, 14c, 14d; 114a, 114b, 114c, 114d; 214a, 214b, 214c, 214d), said engagement means comprising a plurality of first seats (16; 116; 216; 325) extending along an axis that is perpendicular to the upper lateral surface (17; 117; 217) of the nosepiece for being selectively engaged by said tooth of said elastic fork, a plurality of threaded second seats (19; 119; 219; 323) provided at right angles to the lateral surface (20; 120; 220) of the nosepiece, and said locking means being constituted by a pair of screws or cylinders (18a, 18b; 118a, 118b; 218a, 218b; 328), which are threaded externally and are associated within one of adapted and complementarily threaded second seats (19; 119; 219; 323), the size of said second seats and of said screws or cylinders being such that the insertion of said screws or cylinders allows the locking of said tooth within one of said first seats.

2. The frame according to claim 1, **characterized in that** said axial adjustment means comprise said means for engagement, according to preset positions along said nosepiece (6, 106), which has a substantially parallelepipedal and axially hollow shape, for said elastically deformable grip means associated with said first and second supports (2, 102, 3, 103).

3. The frame according to claim 2, **characterized in that** said grip and engagement means lie on a plane that is substantially parallel or perpendicular to the plane of arrangement of said first and second supports (2, 102, 3, 103) and are arranged along a same axis (30, 130) or a staggered axis or a discontinuous axis.

4. The frame according to one or more of the preceding claims, **characterized in that** said nosepiece (6, 106) is constituted by a first arm (7, 107) and by a second arm (8, 108), which protrude, in mutually opposite directions, from the mutually facing outer lateral surfaces (9a, 9b) of said first and second supports (2, 102, 3, 103), said elastically deformable grip means being associated with the end of said first and second arms (7, 107, 8, 108), said grip means being constituted by a first slider (10, 110) and by a second slider (11, 111), which can be inserted/extracted within a cavity (15, 115) that is provided axially, along a same axis or along axes that are staggered or along a discontinuous axis, with respect to said nosepiece (6, 106), and protrude radially from said ends, arranging themselves or not along the same axis (30, 130) that is substantially parallel to the plane of arrangement of said first and second supports (2, 3, 102, 103), said first and second sliders (10, 11, 110, 111) being capable of being arranged also on planes that are mutually staggered both on a horizontal plane and on a vertical plane.

5. The frame according to claim 4, **characterized in that** each one of said first and second sliders (10, 11) has, at one end, said elastic fork (12a, 12b) that is composed of a first tab and a second tab (13a, 13b, 13c, 13d), which are substantially shaped like an inverted V and are arranged one above the other, at the vertex of each one of said first and second tabs (13a, 13b, 13c, 13d) there being said grip means for said engagement means that are provided in said nosepiece (6), said grip means being constituted by said tooth (14a, 14b, 14c, 14d) that is arranged at the vertex of each one of said first and second tabs (13a, 13b, 13c, 13d), each one of said teeth being directed toward the outside of said first and second tabs (13a, 13b, 13c, 13d).

6. The frame according to claim 5, **characterized in that** said engagement means are constituted by a said plurality of first seats (16, 116) that pass through the entire thickness of said nosepiece (6, 106) along an axis that is perpendicular to the upper lateral surface (17, 117) of said nosepiece (6, 106), the shape of said first seats (16, 116) being such as to allow the selective positioning of said teeth (14a, 14b, 14c, 14d, 114a, 114b, 114c, 114d), which are forced into said first seats by the elastic deformability of said first and second tabs (13a, 13b, 13c, 13d, 113a, 113b, 113c, 113d).

7. The frame according to claim 4, **characterized in that** each one of said first and second sliders (110, 111) has, at one end, said elastic fork (112a, 112b) that is composed of a first tab and a second tab (113a, 113b, 113c, 113d), which have a substantially linear shape and are arranged one above the other, at each one of said first and second tabs (113a, 113b, 113c, 113d) there being said grip means for said engagement means provided in said nosepiece (106), said grip means being constituted by said tooth (114a, 114b, 114c, 114d) that protrudes from each one of said first and second tabs (113a, 113b, 113c, 113d) and is directed toward the outside of said first and second tabs (113a, 113b, 113c, 113d).

8. The frame according to claim 4, **characterized in that** each one of said first and second sliders (210, 211) has, at one end, said elastic fork (212a, 212b) that is composed of a first tab and a second tab (213a, 213b, 213c, 213d), which have a substantially linear shape and are arranged one above the other, in said first and second tabs (213a, 213b, 213c, 213d) there being said grip means for said engagement means provided in said nosepiece (206), said grip means being constituted by said tooth in the form of arc-like tabs (214a, 214b, 214c, 214d), which are present at the ends of said first and second tabs (213a, 213b, 213c, 213d), which are directed axially to said cavity (215), the size and shape of said first and second tabs (213a, 213b, 213c, 213d), together with their deformability, being such as to allow their insertion/extraction within a cavity (215) that is provided axially with respect to said nosepiece (206) along a same axis or according to axes that are distinct and/or staggered or along a discontinuous axis.

9. The frame according to claim 8, **characterized in that** said engagement means are constituted by said plurality of first seats (216) that pass through the entire thickness of said nosepiece (206) along an axis that is perpendicular to the upper lateral surface (217) of said nosepiece (206), the shape of said first seats (216) being such as to allow the selective positioning, at one of them, of said arc-like tabs (214a, 214b, 214c, 214d), which are forced into said cavity (215) thanks to the elastic deformability of said first and second tabs (213a, 213b, 213c, 213d).

10. The frame according to claim 1, **characterized in that** it comprises first and second arms (307, 308), each of which is constituted by a hollow body (321a, 321b) that is integral with and protrudes at a first and a second support or eyepiece or lens mount (302, 303), and a substantially T-shaped slider (330) that is slideably associable, adjustably, between said hollow bodies (321a, 321b), each one of said hollow bodies (321a, 321b) being, in transverse cross-section, substantially C-shaped, at the base (322) there being an internally threaded hole (323) constituting said second seat that is connected to a circular lip (323a) that is likewise holed and threaded, there being defined, at the mutually facing ends of the wings (324a, 324b) of each one of said hollow bodies (321a, 321b), said engagement means comprising hollow regions (325) that are adapted to constitute said first seats for a temporary engagement for said grip means that are complementarily contoured grip means that are constituted by at least one said tooth (326) that is associated with and protrudes at said slider (330).

11. The frame according to claim 10, **characterized in that** slideably associated within each each one of said hollow bodies (321a, 321b) are the free ends of said slider (330), the latter having, proximate to said ends, axial cutouts or seats (327), slot-shaped, which are open outwardly so as to define said elastic fork provided with said grip means that are constituted by said at least one tooth (326), each one of said teeth (326) protruding toward one of said hollow regions (325) and, thanks to the deformability of the elastic fork, enabling the insertion of said slider (330) to the desired extent, presettable, into each one of said hollow bodies (321a, 321b).

12. The frame according to claim 11, **characterized in that** the temporary locking, to be used as a solid and permanent fixing, of said slider (330) at a desired point of each one of said hollow bodies (321a, 321b) is obtained by way of a said locking screw (328) whose threaded shank (329) interacts with said complementarily threaded hole (323) that is defined on said base (322), said hole (323) affecting a circular lip (323a) that is likewise holed and threaded and protrudes from each one of said hollow bodies (321a, 321b).

## Patentansprüche

1. Ein Rahmen für Brillen zur Sichtkorrektur und Sonnenbrillen, der einen ersten und einen zweiten Träger (2, 102, 3, 103) für eine Linse (4, 5) umfasst, die dazwischen angeordnet sind und wahlweise mit einem Steg (6, 106; 206) zusammenwirken, der mit Mitteln zur axialen Anpassung des Abstands der optischen Mittelpunkte ausgestattet ist, wobei die Axial-Anpassungsmittel, zwischen den Trägern und dem Steg angeordnet, elastisch verformbare Greifmittel umfassen, die wahlweise in Eingriff mit Eingriffsmitteln stehen, und Blockiermittel, separat von den Greifmitteln, zum Blockieren der Greifmittel mit den Eingriffsmitteln, wobei die elastisch verformbaren Greifmittel eine elastische Gabel (12a, 12b; 112a, 112b; 212a, 212b; 327, 330) umfassen, die mit einem Zahn (14a, 14b, 14c, 14d; 114a, 114b, 114c, 114d; 214a, 214b, 214c, 214d) versehen sind, wobei die Eingriffsmittel eine Vielzahl erster Sitze (16; 116; 216; 325) umfassen, die sich entlang einer Achse erstrecken, welche senkrecht zur oberen seitlichen Oberfläche (17; 117; 217) des Stegs ist, um wahlweise in Eingriff mit dem Zahn der elastischen Gabel zu stehen; eine Vielzahl mit Gewinden versehener zweiter Sitze (19; 119; 219; 323), die in rechten Winkeln zur seitlichen Oberfläche (20; 120; 220) des Stegs angebracht sind; und wobei die Blockiermittel aus einem Paar von Schrauben oder Zylindern (18a, 18b; 118a, 118b; 218a, 218b; 328) bestehen, die ein Außengewinde haben und mit einem Sitz geeigneter Sitze (19; 119; 219; 323) mit komplementärem Gewinde verbunden sind, wobei die Größe der zweiten Sitze und der Schrauben oder Zylinder derart ist, dass das Einsetzen der Schrauben oder Zylinder das Blockieren des Zahns in einem der ersten Sitze ermöglicht.

2. Der Rahmen gemäß Anspruch 1, **dadurch gekennzeichnet, dass** die Axial-Anpassungsmittel die Mittel zum Eingreifen, entsprechend vordefinierten Positionen entlang dem Steg (6, 106), der eine im Wesentlichen parallelepipedische und axial hohle Form hat, für die elastisch verformbaren Greifmittel umfassen, die mit dem ersten und dem zweiten Träger (2, 102, 3, 103) verbunden sind.

3. Der Rahmen gemäß Anspruch 2, **dadurch gekennzeichnet, dass** die Greif- und Eingriffsmittel auf einer Ebene liegen, die im Wesentlichen parallel oder senkrecht zu der Anordnungsebene der ersten und zweiten Träger (2, 102, 3, 103) ist, und entlang einer selben Achse (30, 130), einer versetzten Achse oder einer diskontinuierlichen Achse angeordnet sind.

4. Der Rahmen gemäß einem oder mehreren der obigen Ansprüche, **dadurch gekennzeichnet, dass** der Steg (6, 106) aus einem ersten Arm (7, 107) und einem zweiten Arm (8, 108) besteht, die in entgegengesetzten Richtungen von den einander zugewandten äußeren Seitenflächen (9a, 9b) der ersten und zweiten Träger (2, 102, 3, 103) vorstehen; wobei die elastisch verformbaren Greifmittel mit dem Ende der ersten und zweiten Arme (7, 107, 8, 108) verbunden sind, wobei die Greifmittel aus einem ersten Schieber (10, 110) und einem zweiten Schieber (11, 111) bestehen, die in/aus einen(m) Hohlraum (15, 115) eingeführt/herausgezogen werden können, der axial entlang einer selben Achse oder entlang versetzten Achsen oder entlang einer diskontinuierlichen Achse mit Bezug auf den Steg (6, 106) angebracht ist, und radial von den Enden vorstehen, wobei sie möglicherweise, aber nicht notwendigerweise, entlang derselben Achse (30, 130) liegen, die im Wesentlichen parallel zur Anordnungsebene der ersten und zweiten Träger (2, 3, 102, 103) ist; wobei der erste und der zweite Schieber (10, 11, 110, 111) auch auf Ebenen liegen können, die sowohl in horizontaler Richtung als auch in vertikaler Richtung voneinander versetzt sind.

5. Der Rahmen gemäß Anspruch 4, **dadurch gekennzeichnet, dass** sowohl der erste als auch der zweite Schieber (10, 11) an einem Ende die elastische Gabel (12a, 12b) haben, die aus einer ersten Lasche und einer zweiten Lasche (13a, 13b, 13c, 13d) besteht, die im Wesentlichen wie ein umgekehrtes V geformt und übereinander angeordnet sind, wobei sich am Scheitelpunkt der ersten und der zweiten Lasche (13a, 13b, 13c, 13d) Greifmittel für die Eingriffsmittel befinden, die in dem Steg (6) angebracht sind, wobei die Greifmittel in dem Zahn (14a, 14b, 14c, 14d) bestehen, der am Scheitelpunkt der ersten und der zweiten Lasche (13a, 13b, 13c, 13d) angeordnet ist, wobei jeder der Zähne der Außenseite der ersten und der zweiten Lasche (13a, 13b, 13c, 13d) zugewandt ist.

6. Der Rahmen gemäß Anspruch 5, **dadurch gekennzeichnet, dass** die Eingriffsmittel aus der Vielzahl erster Sitze (16, 116) bestehen, die durch die gesamte Dicke des Stegs (6, 106) entlang einer Achse verlaufen, die senkrecht zur oberen seitlichen Oberfläche (17, 117) des Stegs (6, 106) ist, wobei die Form der ersten Sitze (16, 116) geeignet ist, die selektive Positionierung der Zähne (14a, 14b, 14c, 14d, 114a, 114b, 114c, 114d) zu ermöglichen, die durch die elastische Verformbarkeit der ersten und der zweiten Lasche (13a, 13b, 13c, 13d, 113a, 113b, 113c, 113d) in die ersten Sitze hineingedrückt werden.

7. Der Rahmen gemäß Anspruch 4, **dadurch gekennzeichnet, dass** sowohl der erste als auch der zweite Schieber (110, 111) an einem Ende die elastische Gabel (112a, 112b) haben, die aus einer ersten Lasche und einer zweiten Lasche (113a, 113b, 113c, 113d) besteht, welche eine im Wesentlichen lineare Form haben und übereinander angeordnet sind, wobei sich sowohl an der ersten als auch an der zweiten Lasche (113a, 113b, 113c, 113d) Greifmittel für die Eingriffsmittel befinden, die in dem Steg (106) angebracht sind, wobei die Greifmittel aus dem Zahn (114a, 114b, 114c, 114d) bestehen, der sowohl von der ersten als auch von der zweiten Lasche (113a, 113b, 113c, 113d) vorsteht und der Außenseite der ersten und der zweiten Lasche (113a, 113b, 113c, 113d) zugewandt ist.

8. Der Rahmen gemäß Anspruch 4, **dadurch gekennzeichnet, dass** sowohl der erste als auch der zweite Schieber (210, 211) an einem Ende die elastische Gabel (212a, 212b) haben, die aus einer ersten Lasche und einer zweiten Lasche (213a, 213b, 213c, 213d) besteht, die eine im Wesentlichen lineare Form haben und übereinander angeordnet sind, wobei sich in der ersten und in der zweiten Lasche (213a, 213b, 213c, 213d) die Greifmittel für die Eingriffsmittel befinden, welche in dem Steg (206) angebracht sind, wobei die Greifmittel in dem Zahn in Form bogenförmiger Laschen (214a, 214b, 214c, 214d) bestehen, die sich an den Enden der ersten und der zweiten Lasche (213a, 213b, 213c, 213d) befinden, die axial dem Hohlraum (215) zugewandt sind, wobei die Größe und Form der ersten und der zweiten Lasche (213a, 213b, 213c, 213d), gemeinsam mit ihrer Verformbarkeit, geeignet sind, ihr Einführen in/Herausziehen aus einem Hohlraum (215) zu ermöglichen, der axial zu dem Steg (206) entlang einer selben Achse oder entlang Achsen angebracht ist, die deutlich und/oder versetzt sind oder entlang einer diskontinuierlichen Achse liegen.

9. Der Rahmen gemäß Anspruch 8, **dadurch gekennzeichnet, dass** die Eingriffsmittel in der Vielzahl erster Sitze (216) bestehen, die durch die gesamte Dicke des Stegs (206) entlang einer Achse verlaufen, welche senkrecht zur oberen Seitenfläche (217) des Stegs (206) ist, wobei die Form der ersten Sitze (216) geeignet ist, die selektive Positionierung der bogenförmigen Laschen (214a, 214b, 214c, 214d) an einem solchen zu ermöglichen, die aufgrund der elastischen Verformbarkeit der ersten und der zweiten Lasche (213a, 213b, 213c, 213d) in den Hohlraum (215) gedrückt werden.

10. Der Rahmen gemäß Anspruch 1, **dadurch gekennzeichnet, dass** er erste und zweite Arme (307, 308) umfasst, die jeweils aus einem Hohlkörper (321a, 321b), der integral mit einem ersten und einem zweiten Träger oder Okular oder einer Linsenfassung (302, 303) ist und von ihm/ihr vorsteht, und einem im Wesentlichen T-förmigen Schieber (330) bestehen, der verschiebbar anpassbar zwischen den Hohlkörpern (321a, 321b) eingebaut werden kann, wobei jeder der Hohlkörper (321a, 321b) im Querschnitt im Wesentlichen C-förmig ist und sich an der Basis (322) ein Loch (323) mit Innengewinde befindet, das den zweiten Sitz bildet und mit einer kreisförmigen Lippe (323a) verbunden ist, die ebenfalls mit einem Loch und einem Gewinde versehen ist, wobei an den einander zugewandten Enden der Flügel (324a, 324b) jedes der Hohlkörper (321a, 321b) die Eingriffsmittel bestimmt sind, die hohle Bereiche (325) umfassen, welche ausgebildet sind, um die ersten Sitze für einen vorübergehenden Eingriff der Greifmittel zu bilden, die komplementär konturierte Greifmittel sind, welche aus dem mindestens einen Zahn (326) bestehen, der mit dem Schieber (330) verbunden ist und von ihm vorsteht.

11. Der Rahmen gemäß Anspruch 10, **dadurch gekennzeichnet, dass** in jeden der Hohlkörper (321a, 321b) die freien Enden des Schiebers (330) verschiebbar eingeführt sind, der nahe den Enden axiale schlitzförmige Ausschnitte oder Sitze (327) hat, die nach außen offen sind, um die elastische Gabel zu bestimmen, die mit den Greifmitteln ausgestattet ist, welche in dem mindestens einen Zahn (326) bestehen, wobei jeder der Zähne (326) zu einem der hohlen Bereiche (325) hin vorsteht und aufgrund der Verformbarkeit der elastischen Gabel das Einführen des Schiebers (330) in jeden der Hohlkörper (321a, 321b) im gewünschten vordefinierbaren Maße ermöglicht.

12. Der Rahmen gemäß Anspruch 11, **dadurch gekennzeichnet, dass** das vorübergehende Blockieren des Schiebers (330) an einem gewünschten Punkt jedes der Hohlkörper (321a, 321b), das als dauerhafte Fixierung genutzt werden soll, mit Hilfe der Sicherungsschraube (328) erzielt wird, deren Gewindeschaft (329) mit dem komplementären Gewindeloch (323) zusammenwirkt, das in der Basis (322) bestimmt ist, wobei das Loch (323) eine kreisförmige Lippe (323a) beeinflusst, die ebenfalls mit einem Loch und einem Gewinde versehen ist und von jedem der Hohlkörper (321a, 321b) vorsteht.

## Revendications

1. Monture pour des lunettes de correction et des lunettes de soleil, comportant un premier support et un second support (2, 102, 3, 103) pour une lentille (4, 5), qui sont intercalés et interagissent sélectivement avec une arcade nasale (6, 106 ; 206) pourvue de moyens pour un réglage axial de la distance des centres optiques, lesdits moyens de réglage axial comportant, agencés entre lesdits supports et ladite arcade nasale, des moyens de prise élastiquement déformables qui s'engagent sélectivement dans des moyens d'engagement, et des moyens de blocage, séparés desdits moyens de prise, pour bloquer lesdits moyens de prise avec lesdits moyens d'engagement, lesdits moyens de prise élastiquement déformables comportant une fourchette élastique (12a, 12b ; 112a, 112b ; 212a, 212b ; 327, 330) pourvue d'une dent (14a, 14b, 14c, 14d; 114a, 114b, 114c, 114d ; 214a, 214b, 214c, 214d), lesdits moyens d'engagement comportant une pluralité de premiers logements (16 ; 116 ; 216; 325) s'étendant le long d'un axe qui est perpendiculaire à la surface latérale supérieure (17 ; 117 ; 217) de l'arcade nasale dans lesquels s'engage sélectivement ladite dent de ladite fourchette élastique, une pluralité de seconds logements filetés (19 ; 119 ; 219 ; 323) agencés à angles droits par rapport à la surface latérale (20 ; 120 ; 220) de l'arcade nasale, et lesdits moyens de blocage étant constitués d'une paire de vis ou de cylindres (18a, 18b; 118a, 118b; 218a, 218b ; 328), qui sont filetés extérieurement et sont associés à l'intérieur de l'un des seconds logements adaptés et filetés de manière complémentaire (19; 119 ; 219 ; 323), la taille desdits seconds logements et desdites vis ou desdits cylindres étant telle que l'insertion desdites vis ou desdits cylindres permet le blocage de ladite dent à l'intérieur d'un desdits premiers logements.

2. Monture selon la revendication 1, **caractérisée en ce que** lesdits moyens de réglage axial comportent lesdits moyens d'engagement, en fonction de positions préréglées le long de ladite arcade nasale (6, 106), qui a une forme sensiblement parallélépipédique et axialement creuse, pour lesdits moyens de prise élastiquement déformables associés auxdits premier et second supports (2, 102, 3, 103).

3. Monture selon la revendication 2, **caractérisée en ce que** lesdits moyens de prise et d'engagement se situent sur un plan qui est sensiblement parallèle ou perpendiculaire au plan d'agencement desdits premier et second supports (2, 102, 3, 103) et sont agencés le long d'un même axe (30, 130) ou d'un axe décalé ou d'un axe discontinu.

4. Monture selon une ou plusieurs des revendications précédentes, **caractérisée en ce que** ladite arcade nasale (6, 106) est constituée d'un premier bras (7, 107) et d'un second bras (8, 108), qui font saillie, dans des directions mutuellement opposées, à partir des surfaces latérales extérieures mutuellement opposées (9a, 9b) desdits premier et second supports (2, 102, 3, 103), lesdits moyens de prise élastiquement déformables étant associés à l'extrémité desdits premier et second bras (7, 107, 8, 108), lesdits moyens de prise étant constitués d'un premier coulisseau (10, 110) et d'un second coulisseau (11, 111), qui peuvent être insérés/extraits à l'intérieur d'une cavité (15, 115) qui est agencée axialement, le long d'un même axe ou le long d'axes qui sont décalés ou le long d'un axe discontinu, par rapport à ladite arcade nasale (6, 106), et font radialement saillie à partir desdites extrémités, en s'agençant eux-mêmes ou non le long du même axe (30, 130) qui est sensiblement parallèle au plan d'agencement desdits premier et second supports (2, 3, 102, 103), lesdits premier et second coulisseaux (10, 11, 110, 111) pouvant être également agencés sur des plans qui sont mutuellement décalés à la fois sur un plan horizontal et sur un plan vertical.

5. Monture selon la revendication 4, **caractérisée en ce que** chacun desdits premier et second coulisseaux (10, 11) a, à une extrémité, ladite fourchette élastique (12a, 12b) qui est composée d'une première languette et d'une seconde languette (13a, 13b, 13c, 13d), qui sont sensiblement formées comme un V inversé et sont agencées l'une au-dessus de l'autre, au sommet de chacune desdites première et seconde languettes (13a, 13b, 13c, 13d) étant agencés lesdits moyens de prise pour lesdits moyens d'engagement qui sont agencés dans ladite arcade nasale (6), lesdits moyens de prise étant constitués de ladite dent (14a, 14b, 14c, 14d) qui est agencée au sommet de chacune des première et seconde languettes (13a, 13b, 13c, 13d), chacune desdites dents étant dirigée vers l'extérieur desdites première et seconde languettes (13a, 13b, 13c, 13d).

6. Monture selon la revendication 5, **caractérisée en ce que** lesdits moyens d'engagement sont constitués de ladite pluralité de premiers logements (16, 116) qui passent à travers l'épaisseur complète de ladite arcade nasale (6, 106) le long d'un axe qui est perpendiculaire à la surface latérale supérieure (17, 117) de ladite arcade nasale (6, 106), la forme desdits premiers logements (16, 116) étant telle qu'elle permet le positionnement sélectif desdites dents (14a, 14b, 14c, 14d, 114a, 114b, 114c, 114d), qui sont forcées dans lesdits premiers logements par la déformabilité élastique desdites première et seconde languettes (13a, 13b, 13c, 13d, 113a, 113b, 113c, 113d).

7. Monture selon la revendication 4, **caractérisée en ce que** chacun desdits premier et second coulisseaux (110, 111) a, à une extrémité, ladite fourchette élastique (112a, 112b) qui est composée d'une première languette et d'une seconde languette (113a, 113b, 113c, 113d), qui ont une forme sensiblement linéaire et sont agencées l'une au-dessus de l'autre, sur chacune desdites première et seconde languettes (113a, 113b, 113c, 113d), étant disposés lesdits moyens de prise pour lesdits moyens d'engagement prévus dans ladite arcade nasale (106), lesdits moyens de prise étant constitués de ladite dent (114a, 114b, 114c, 114d) qui fait saillie à partir de chacune desdites première et seconde languettes (113a, 113b, 113c, 113d) et est dirigée vers l'extérieur desdites première et seconde languettes (113a, 113b, 113c, 113d).

8. Monture selon la revendication 4, **caractérisée en ce que** chacun desdits premier et second coulisseaux (210, 211) a, à une extrémité, ladite fourchette élastique (212a, 212b) qui est composée d'une première languette et d'une seconde languette (213a, 213b, 213c, 213d), qui ont une forme sensiblement linéaire et sont agencées l'une au-dessus de l'autre, dans lesdites première et seconde languettes (213a, 213b, 213c, 213d), étant disposés lesdits moyens de prise pour lesdits moyens d'engagement prévus dans ladite arcade nasale (206), lesdits moyens de prise étant constitués de ladite dent sous la forme de languettes analogues à des arcs (214a, 214b, 214c, 214d), qui sont présents aux extrémités desdites première et seconde languettes (213a, 213b, 213c, 213d), qui sont dirigées axialement par rapport à ladite cavité (215), la taille et la forme desdites première et seconde languettes (213a, 213b, 213c, 213d), ainsi que leur déformabilité, étant telles qu'elles permettent leur insertion/extraction à l'intérieur d'une cavité (215) qui est disposée axialement par rapport à ladite arcade nasale (206) le long d'un même axe ou selon des axes qui sont distincts et/ou décalés ou le long d'un axe discontinu.

9. Monture selon la revendication 8, **caractérisée en ce que** lesdits moyens d'engagement sont constitués de ladite pluralité de premiers logements (216) qui passent à travers l'épaisseur complète de ladite arcade nasale (206) le long d'un axe qui est perpendiculaire à la surface latérale supérieure (217) de ladite arcade nasale (206), la forme desdits premiers logements (216) étant telle qu'elle permet le positionnement sélectif, au niveau de l'un d'eux, desdites languettes analogues à des arcs (214a, 214b, 214c, 214d) qui sont forcées dans ladite cavité (215) grâce à la déformabilité élastique desdites première et seconde languettes (213a, 213b, 213c, 213d).

10. Monture selon la revendication 1, **caractérisée en ce qu'**elle comporte des premier et second bras (307, 308), dont chacun est constitué d'un corps creux (321a, 321b) qui est solidaire d'un premier et d'un second support ou oculaire ou monture de lentille (302, 303) et fait saillie au niveau de celui-ci, et un coulisseau sensiblement en forme de T (330) qui peut être associé de manière coulissante, de façon réglable, entre lesdits corps creux (321a, 321b), chacun desdits corps creux (321a, 321b) étant, en coupe transversale, sensiblement en forme de C, sur la base (322) étant agencé un trou fileté intérieurement (323) constituant ledit second logement qui est relié à une lèvre circulaire (323a) qui est pourvue d'un trou et filetée de façon analogue, aux extrémités mutuellement opposées des ailes (324a, 324b) de chacun desdits corps creux (321a, 321b) étant définis lesdits moyens d'engagement comportant des zones creuses (325) qui sont adaptées pour constituer lesdits premiers logements en vue d'un engagement temporaire desdits moyens de prise qui sont des moyens de prise profilés de manière complémentaire qui sont constitués d'au moins une dite dent (326) qui est associée audit coulisseau (330) et fait saillie au niveau de celui-ci.

11. Monture selon la revendication 10, **caractérisée en ce qu'**à l'intérieur de chacun desdits corps creux (321a, 321b) sont associées de manière coulissante les extrémités libres dudit coulisseau (330), ce dernier ayant, près desdites extrémités, des découpes axiales ou des logements (327), en forme de fentes, qui sont ouverts vers l'extérieur de manière à définir ladite fourchette élastique pourvue desdits moyens de prise qui sont constitués de ladite au moins une dent (326), chacune desdites dents (326) faisant saillie vers l'une desdites zones creuses (325) et, grâce à la déformabilité de la fourchette élastique, permettant l'insertion dudit coulisseau (330) dans la mesure souhaitée, préréglable, dans chacun desdits corps creux (321a, 321b).

12. Monture selon la revendication 11, **caractérisée** que le blocage temporaire, à utiliser comme une fixation solide et permanente, dudit coulisseau (330) à un point voulu de chacun desdits corps creux (321a, 321b) est obtenu au moyen de ladite vis de blocage (328) dont la tige filetée (329) interagit avec ledit trou fileté de manière complémentaire (323) qui est défini sur ladite base (322), ledit trou (323) affectant une lèvre circulaire (323a) qui est munie d'un trou et filetée de façon analogue et fait saillie à partir de chacun desdits corps creux (321a, 321b).
